# EUROPÄISCHE PATENTSCHRIFT

(11) **EP 0 930 256 B1**
(45) Veröffentlichungstag und Bekanntmachung des Hinweises auf die Patenterteilung: **30.10.2002**
(21) Anmeldenummer: 99100772.5
(22) Anmeldetag: 16.01.1999
(51) Int. Cl.: B65G 53/46

(54) **Entlüftungsöffnung für Zellenradschleuse**
Vent orifice for a cellular rotary valve
Orifice de ventilation pour une vanne à roue cellulaire

(30) Priorität: 20.01.1998 DE 19801747
(43) Veröffentlichungstag der Anmeldung: 21.07.1999
(73) Patentinhaber: Coperion Waeschle GmbH & Co. KG, 88250 Weingarten (DE)
(72) Erfinder: Beirle, Walter, 88212 Ravensburg (DE); Pfeifer, Kurt, 88682 Salem-Beuren (DE); König, Ewald, 88271 Zussdorf (DE)
(74) Vertreter: Rau, Albrecht

(56) Entgegenhaltungen:
- DE-A- 2 638 778
- DE-A- 3 711 084
- DE-A- 4 135 593

## Beschreibung

Die Erfindung betrifft eine Zellenradschleuse zum Fördern oder Dosieren von Schüttgut in eine pneumatische Förderleitung, bestehend aus einem Gehäuse mit einem Zulaufschacht, einem Auslaufschacht und einem in einer Gehäusebohrung drehbar gelagerten Zellenrad, wobei im Gehäuse zur Entlüftung der aufwärts drehenden Kammern des Zellenrads mindestens eine in Drehrichtung vor dem Zulaufschacht befindliche Entlüftungsöffnung angeordnet ist.

### Stand der Technik

Eine gattungsgemäße Vorrichtung ist aus der Patentschrift DE 41 35 593 A1 bekannt. Das Gehäuse weist in Drehrichtung des Zellenrads vor dem Zulaufschacht eine schlitzförmige Entlüftungsöffnung auf. Über diese Entlüftungsöffnung werden die Leckageluft aus den aufwärts drehenden, schüttgutfreien Kammern des Zellenrads abgeführt und die Kammern auf den im Zulaufschacht herrschenden Druck entspannt, damit der erneute Zulauf von Schüttguts in das Zellenrad nicht behindert wird.

Um eine schlagartige Entspannung der Kammern zu verhindern und die Geräuschemissionen beim Betrieb der Zellenradschleuse zu verringern, ist der auf der Mantelfläche der Gehäusebohrung liegende Umfang der Entlüftungsöffnung auf seiner unteren Seite leicht pfeilförmig zur Längsachse des Zellenrads ausgebildet, so daß bei einer Drehung des Zellenrads die Entspannung der Kammern über einen sich mit der Drehung vergrößernden, mit der zu entspannenden Kammer überdeckten freien Querschnitt der Entlüftungsöffnung erfolgt.

Eine derartige Ausbildung führt allerdings nur bei Zellenradschleusen zu zufriedenstellenden Ergebnissen, die gegen eine verhältnismäßig niedrige Druckdifferenz (beispielsweise 3,5 bar) fördern, da sich der freie Querschnitt der Entlüftungsöffnung bei Drehung des Zellenrads sehr schnell erweitert und bei hohen Gegendrücken einen Entspannungsstoß bewirkt.

### Aufgabe der Erfindung

Der Erfindung liegt die Aufgabe zugrunde, eine gattungsgemäße Zellenradschleuse in der Weise weiterzuentwickeln, daß aus den aufwärts drehenden, schüttgutfreien Kammern des Zellenrads auch beim Betrieb unter hohem Gegendruck die Leckageluft geräuscharm abgeführt werden kann.

### Lösung

Die Aufgabe wird erfindungsgemäß dadurch gelöst, daß der auf der Mantelfläche der Gehäusebohrung liegende Umfang der Entlüftungsöffnung(en) eine Vielzahl von gegen die Drehrichtung des Zellenrads gerichteten Ausbuchtungen aufweist.

Je nach Anzahl und geometrischer Ausführung dieser Ausbuchtungen kann die Leckageluft unter den Bedingungen aus den Kammern des Zellenrads abgeführt werden, bei denen die Schleuse besonders geräuscharm arbeitet.

### Figuren

In den Figuren werden Ausführungen der erfindungsgemäßen Zellenradschleuse beispielhaft dargestellt. Dabei zeigen:
- Fig. 1: einen Schnitt entlang der Medianebene A-A durch eine erfindungsgemäße Zellenradschleuse
- Fig. 2: eine Aufsicht auf den auf der Mantelfläche der Gehäusebohrung liegenden Umfang der Entlüftungsöffnung einer erfindungsgemäßen Zellenradschleuse
- Figur 3: eine Aufsicht auf den auf der Mantelfläche der Gehäusebohrung liegenden Umfang der Entlüftungsöffnung einer anderen erfindungsgemäßen Zellenradschleuse
- Fig. 4: einen Schnitt entlang der Medianebene A-A durch eine weitere erfindungsgemäße Zellenradschleuse
- Fig. 5: eine graphische Darstellung der Schalldruckmessung einer mit einem erfindungsgemäßen Einsatz nachgerüsteten Zellenradschleuse

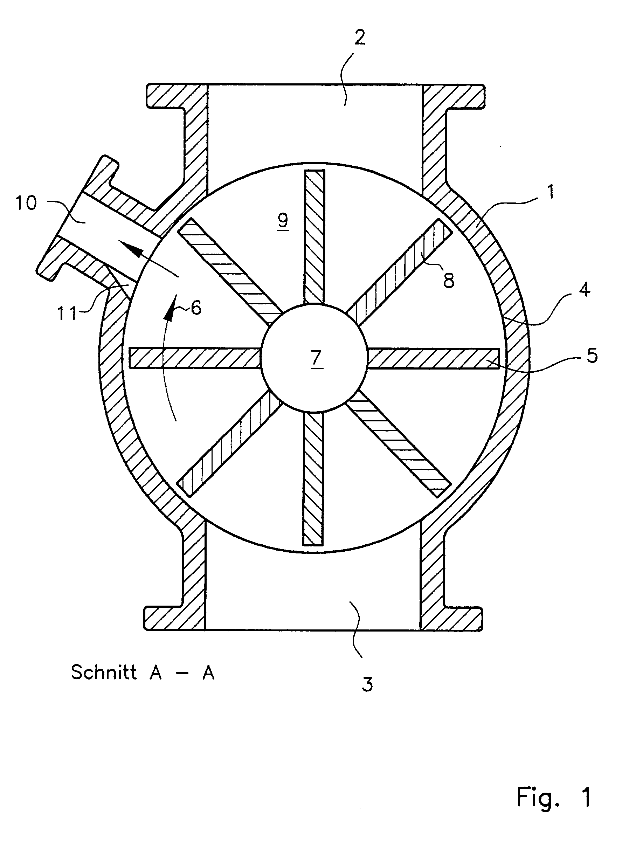

Die in Fig. 1 dargestellte Zellenradschleuse umfaßt ein Gehäuse 1 mit einem Zulaufschacht 2 für die Zufuhr des Schüttguts und einem Auslaufschacht 3 für den Austrag des Schüttguts. In der Gehäusebohrung 4 der Zellenradschleuse, die üblicherweise eine zylindrische, aber auch kegelstumpfförmige Gestalt aufweisen kann, ist das Zellenrad 5 in Richtung des Pfeiles 6 drehbar angeordnet. Das Zellenrad umfaßt eine Welle 7 und eine Anzahl mit dieser verbundener, im Ausführungsbeispiel gerade ausgeführter Stege 8, welche die Kammern 9 bilden.

Die jeweils obenliegende Kammer entnimmt aus dem unter niedrigen, beispielsweise atmosphärischen Gasdruck stehenden Zulaufschacht 2 ein Schüttgutvolumen, das im günstigsten Fall der Größe des Kammervolumens entspricht. Erreicht die gefüllte Kammer nach Drehung des Zellenrads 5 den unter hohem Gasdruck stehenden Auslaufschacht 3, wird das Schüttgut unter dem Einfluß der Schwerkraft aus der Kammer 9 ausgetragen und durch ein entsprechendes Volumen des unter hohem Druck stehenden Gases ersetzt. Diese Gasmenge würde beim erneuten Erreichen des Zulaufschachts 2 in diesen entspannen und die Wiederbefüllung der Kammer 9 behindern.

Vor dem Zulaufschacht 2 ist daher eine Entlüftungsöffnung 10 angeordnet, welche die Gehäusebohrung 4 mit der Umgebung oder einem dem Zulaufschacht zugeordneten, nicht dargestellten Vorbehälter verbindet. Über die Entlüftungsöffnung 10 wird die überschüssige Gasmenge aus der Kammer 9 abgeführt, in die nachfolgend wieder ungehindert Schüttgut eingetragen werden kann.

Die Entlüftungsöffnung 10 weist auf ihrem auf der Mantelfläche der Gehäusebohrung 4 liegenden Umfang eine Vielzahl von Ausbuchtungen 11 auf, die gegen die Drehrichtung des Zellenrads 5 gerichtet sind. Die zu entlüftende Kammer 9 wird bei Drehung des Zellenrads 5 zuerst über die Ausbuchtungen 11 unter definierten Bedingungen teilentspannt, bevor das restliche Leckagegas über den gesamten Querschnitt der Entlüftungsöffnung 10 abgeführt wird.

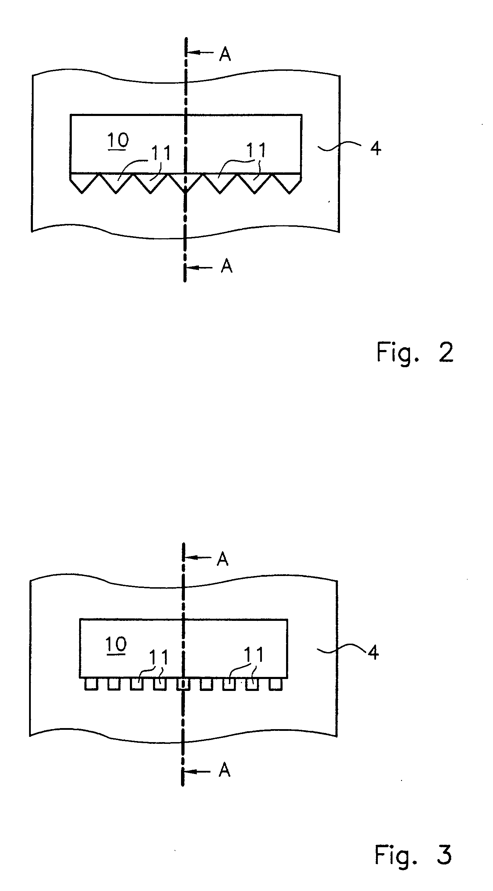

Die Entlüftungsöffnung kann, wie in den Ausführungsbeispielen nach Fig. 2 oder 3 dargestellt, einen grundsätzlich rechteckigen Querschnitt aufweisen. Es versteht sich jedoch, daß die Erfindung auch auf anders gestaltete Entlüftungsöffnungen anwendbar ist, beispielsweise auf die aus dem Stand der Technik bekannten Entlüftungsöffnungen mit grundsätzlich pfeilförmigem Querschnitt.

Die Ausbuchtungen 11 können nach Fig. 2 keilförmig ausgebildet sein, wobei die Spitzen der Keile gegen die Drehrichtung des Zellenrads 5 weisen. Diese Ausführung ist zu bevorzugen, wenn die Zellenradschleuse mit unterschiedlichen Drehzahlen betrieben wird. Der sich im Bereich der Ausbuchtungen 11 erweiternde freie Querschnitt der Entlüftungsöffnung 10 trägt den bei hohen Drehzahlen verkürzten Entlüftungszeiten Rechnung.

Nach Fig. 3 können die Ausbuchtungen 11 in der Entlüftungsöffnung 10 auch rechteckig geformt sein, insbesondere bei im wesentlichen gleichbleibender Drehzahl des Zellenrads 5.

Desweiteren sind andere geometrische Ausbildungen der Ausbuchtungen 11 denkbar, beispielsweise wellenförmige oder treppenförmige, wobei sich die jeweils günstigste Form nach dem Volumen der Kammern und den Einsatzbedingungen der Zellenradschleuse, insbesondere nach der Drehzahl, Druckdifferenz und Art des Druckgases richtet. Um die Geräuschentwicklung weiter zu verringern, kann es sich als nützlich erweisen, die auf der Mantelfläche der Gehäusebohrung 4 liegenden Kanten der Ausbuchtungen 11 abzurunden.

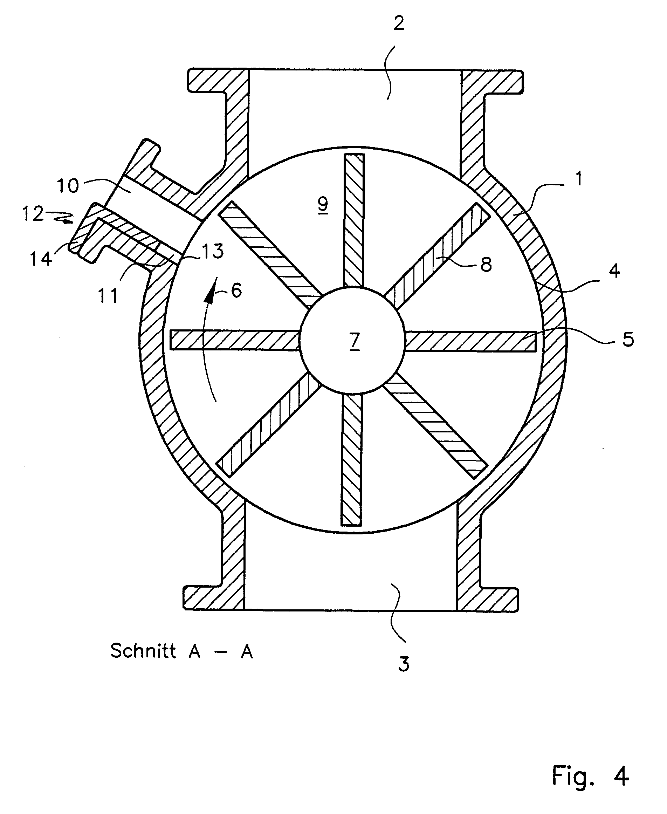

Bei der in Fig. 4 abgebildeten Zellenradschleuse werden die Ausbuchtungen 11 durch einen in die Entlüftungsbohrung 10 eingefügten, an seiner Stirnfläche 13 partiell ausgesparten winkelförmigen Einsatz 12 gebildet, der im Ausführungsbeispiel über den Schenkel 14 mit dem Gehäuse 1 verschraubt ist. Die Entlüftungsöffnung 10 im üblicherweise gegossenen Gehäuse 1 kann in diesem Fall in einer gußtechnisch günstigen, einfachen Geometrie ausgeführt werden. Ferner werden nachträgliche Anpassungen der Ausbuchtungen 11 an die Betriebsbedingungen der Zellenradschleuse vereinfacht.

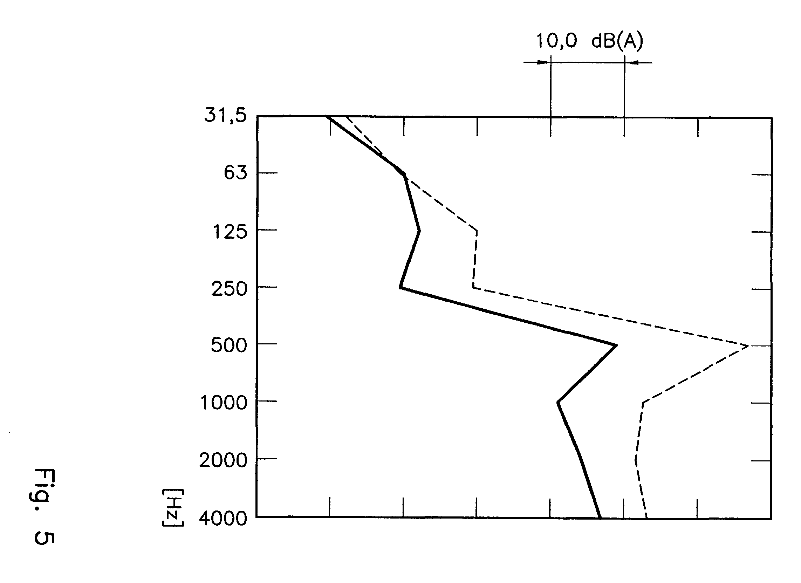

Aus der graphischen Darstellung in Fig. 5 läßt die Wirkung einer erfindungsgemäß gestalteten Entlüftungsöffnung ablesen. Die gemessene Schalleistung ist dabei auf der Ordinatenachse aufgetragen, das Frequenzspektrum auf der Abszisse.

Die gestrichelte Meßkurve zeigt die Schallemission einer Hochdruck-Zellenradschleuse (Gegendruck 6 bar) mit herkömmlich gestalteter Entlüftungsöffnung, während die durchgängig gezeichnete Meßkurve den Verlauf der frequenzabhängigen Schallemission für eine Entlüftungsöffnung darstellt, die nachträglich mit einem erfindungsgemäßen nachrüstbaren Einsatz versehen wurde. Der Einsatz weist bei einer Breite von 410 mm auf seiner auf der Mantelfläche der Gehäusebohrung liegenden Stirnfläche eine Vielzahl, nämlich 18 rechteckige Ausbuchtungen von jeweils 10 mm Breite und 4 mm Tiefe auf. Insbesondere im mittleren Frequenzbereich von 125 bis 1000 Hertz [Hz] läßt sich auf diese Weise mit geringem Aufwand eine erhebliche Verringerung der Schallemission erzielen.

### Bezugszeichenliste

- 1: Gehäuse
- 2: Zulaufschacht
- 3: Auslaufschacht
- 4: Gehäusebohrung
- 5: Zellenrad
- 6: Pfeil (Drehrichtung)
- 7: Welle
- 8: Steg
- 9: Kammer
- 10: Entlüftungsöffnung
- 11: Ausbuchtung
- 12: Einsatz
- 13: Stirnfläche
- 14: Schenkel

## Patentansprüche

1. Zellenradschleuse zum Fördern oder Dosieren von Schüttgut in eine pneumatische Förderleitung, bestehend aus einem Gehäuse (1) mit einem Zulaufschacht (2), einem Auslaufschacht (3) und einem in einer Gehäusebohrung (4) drehbar gelagerten Zellenrad (5), wobei im Gehäuse zur Entlüftung der aufwärts drehenden Kammern (9) des Zellenrads mindestens eine in Drehrichtung (6) vor dem Zulaufschacht befindliche Entlüftungsöffnung (10) angeordnet ist, **dadurch gekennzeichnet, daß** der auf der Mantelfläche der Gehäusebohrung liegende Umfang der Entlüftungsöffnung(en) eine Vielzahl von gegen die Drehrichtung des Zellenrads gerichteten Ausbuchtungen (11) aufweist.

2. Zellenradschleuse nach Anspruch 1, **dadurch gekennzeichnet, daß** die Ausbuchtungen (11) keilförmig ausgebildet sind, wobei die Spitzen der keilförmigen Ausbuchtungen (1) gegen die Drehrichtung des Zellenrads (5) weisen.

3. Zellenradschleuse nach Anspruch 1, **dadurch gekennzeichnet, daß** die Ausbuchtungen (11) rechteckig geformt sind.

4. Zellenradschleuse nach Anspruch 1, **dadurch gekennzeichnet, daß** die Ausbuchtungen (11) wellenförmig ausgebildet sind.

5. Zellenradschleuse nach einem der vorangegangenen Ansprüche, **dadurch gekennzeichnet, daß** die Ausbuchtungen (11) durch einen in die Entlüftungsöffnung (10) eingefügten, an seiner Stirnfläche (13) partiell ausgesparten Einsatz (12) gebildet werden.

## Claims

1. A rotary valve for conveying or metering bulk material into a pneumatic conveying conduit, comprising a housing (1) with a supply chute (2), a discharge chute (3) and a cellular wheel (5) supported rotatably within a housing cavity (4) in which at least one venting opening (10) for venting the upward moving cells (9) of the cellular wheel is arranged, **characterized in that** the perimeter of the venting opening(s) being arranged on the peripheral wall of the housing cavity shows a plurality of recesses (11) which extend against the direction of rotation of the cellular wheel.

2. Rotary valve according to claim 1, **characterized in that** the recesses (11) are wedge-shaped, wherein the vertices of the wedge-shaped recesses (1) are pointing against the direction of rotation of the cellular wheel (5).

3. Rotary valve according to claim 1, **characterized in that** the recesses (11) are shaped rectangularly.

4. Rotary valve according to claim 1, **characterized in that** the recesses (11) undulate.

5. Rotary valve according to any of the previous claims, **characterized in that** the recesses (11) are formed by an insert (12) which is inserted into the venting opening (10) and which is recessed partially at its abutting face (13).

## Revendications

1. Vanne à roue cellulaire pour le refoulement ou le dosage de produits en vrac dans une conduite de refoulement pneumatique, composée d'un boîtier (1) avec un puits d'alimentation (2), un puits de sortie (3) et une roue cellulaire (5) placée de manière pivotante dans un alésage du boîtier (4), au moins un orifice de ventilation (10) situé en amont du puits d'alimentation dans le sens de rotation (6) étant placé dans le boîtier pour la ventilation des chambres (9) de la roue cellulaire en rotation ascendante, **caractérisée en ce que** la circonférence de(des) orifice(s) de ventilation située sur la surface de l'enveloppe de l'alésage du boîtier présente une multitude de courbures (11) orientées à l'inverse du sens de rotation de la roue cellulaire.

2. Vanne à roue cellulaire selon la revendication 1, **caractérisée en ce que** les courbures (11) sont formées en forme de clavette, les pointes des courbures (11) en forme de clavette étant tournées à l'inverse du sens de rotation de la roue cellulaire (5).

3. Vanne à roue cellulaire selon la revendication 1, **caractérisée en ce que** les courbures (11) sont de forme rectangulaire.

4. Vanne à roue cellulaire selon la revendication 1, **caractérisée en ce que** les courbures (11) sont en forme d'onde.

5. Vanne à roue cellulaire selon l'une quelconque des revendications précédentes, **caractérisée en ce que** les courbures (11) sont formées par un insert (12) inséré dans l'orifice de ventilation (10), partiellement évidé sur sa surface frontale (13).
